(19)

Europäisches Patentamt
European Patent Office
Office européen des brevets

(11) **EP 4 340 434 A1**

(12) **EUROPEAN PATENT APPLICATION**
published in accordance with Art. 153(4) EPC

(43) Date of publication:
**20.03.2024 Bulletin 2024/12**

(21) Application number: **22863393.9**

(22) Date of filing: **29.08.2022**

(51) International Patent Classification (IPC):
**H04W 24/02** *(2009.01)* **H04W 52/02** *(2009.01)*
**H04W 92/10** *(2009.01)*

(52) Cooperative Patent Classification (CPC):
**H04W 24/02; H04W 52/02; H04W 92/10;**
Y02D 30/70

(86) International application number:
**PCT/CN2022/115532**

(87) International publication number:
**WO 2023/030257 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2021 CN 202111033942**

(71) Applicant: ZTE Corporation
**Shenzhen, Guangdong 518057 (CN)**

(72) Inventors:
• YIN, Yachao
**Shenzhen, Guangdong 518057 (CN)**
• ZHANG, Nan
**Shenzhen, Guangdong 518057 (CN)**
• DOU, Jianwu
**Shenzhen, Guangdong 518057 (CN)**

(74) Representative: **Iannone, Carlo Luigi et al**
**Barzanò & Zanardo Milano S.p.A.**
**Via Borgonuovo, 10**
**20121 Milano (IT)**

(54) **POWER DETERMINATION METHOD, DEVICE AND STORAGE MEDIUM**

(57)    Provided are a power determination method, a device and a storage medium. A power determination method applied by a first communication node includes: receiving configuration information for indicating N power reduction parameter sets of transmit power; and determining transmit power corresponding to the first communication node according to at least one power reduction parameter in the N power reduction parameter sets.

Receive configuration information for indicating N power reduction parameter sets of transmit power —S210

Determine transmit power of a first communication node according to at least one power reduction parameter in the N power reduction parameter sets —S220

**FIG. 2**

EP 4 340 434 A1

**Description**

TECHNICAL FIELD

The present application relates to the field of communications, for example, a power determination method, a device and a storage medium.

BACKGROUND

In a New Radio (NR) system, sidelink direct communication of a terminal group is generally performed mainly based on line of sight (LOS) channels, and a propagation coverage range of a terminal is wide, causing interference to other terminal groups and a neighboring system. Meanwhile, the terminal uses a single upper limit of maximum transmit power in different states, causing relatively high transmit power and increased interference.

SUMMARY

Embodiments of the present application provide a power determination method, a device and a storage medium, reducing system interference and saving the power consumption of a first communication node.

Embodiments of the present application provide a power determination method. The method is applied by a first communication node and includes: receiving configuration information for indicating N power reduction parameter sets of transmit power; and determining transmit power corresponding to the first communication node according to at least one power reduction parameter in the N power reduction parameter sets.

Embodiments of the present application provide a power determination method. The method is applied by a second communication node and includes: pre-configuring configuration information for indicating N power reduction parameter sets of transmit power; and sending the configuration information to a first communication node so that the first communication node determines transmit power corresponding to the first communication node.

Embodiments of the present application provide a power determination apparatus. The apparatus is applied to a first communication node and includes a receiver and a first determination module.

The receiver is configured to receive configuration information for indicating N power reduction parameter sets of transmit power. The first determination module is configured to determine transmit power corresponding to the first communication node according to at least one power reduction parameter in the N power reduction parameter sets.

Embodiments of the present application provide a power determination apparatus. The apparatus is applied to a second communication node and includes a pre-configuration module and a first sender.

The pre-configuration module is configured to pre-configure configuration information for indicating N power reduction parameter sets of transmit power. The first sender is configured to send the configuration information to a first communication node so that the first communication node determines transmit power corresponding to the first communication node.

Embodiments of the present application provide a communication device including a communication module, a memory and one or more processors. The communication module is configured to perform communication interaction between a first terminal, a second terminal in a terminal group and a second communication node. The memory is configured to store one or more programs. When executed by the at least one processor, the at least one program causes the at least one processor to perform the method according to any one of the preceding embodiments.

Embodiments of the present application provide a storage medium configured to store a computer program which, when executed by a processor, causes the processor to perform the method according to any one of the preceding embodiments.

BRIEF DESCRIPTION OF DRAWINGS

FIG. 1 is a schematic diagram of sidelink communication between two terminals in an NR system in the related art;

FIG. 2 is a flowchart of a power determination method according to an embodiment of the present application;

FIG. 3 is a flowchart of another power determination method according to an embodiment of the present application;

FIG. 4 is a schematic diagram of communication between a network side and a terminal according to an embodiment of the present application;

FIG. 5 is another schematic diagram of communication between a network side and terminals according to an embodiment of the present application;

FIG. 6 is a block diagram of a power determination apparatus according to an embodiment of the present application;

FIG. 7 is a block diagram of another power determination apparatus according to an embodiment of the present application; and

FIG. 8 is a structure diagram of a communication device according to an embodiment of the present application.

## DETAILED DESCRIPTION

Embodiments of the present application are described hereinafter in conjunction with the drawings. The present application is described below in conjunction with embodiments and the drawings, and the examples illustrated are intended only to explain the present application.

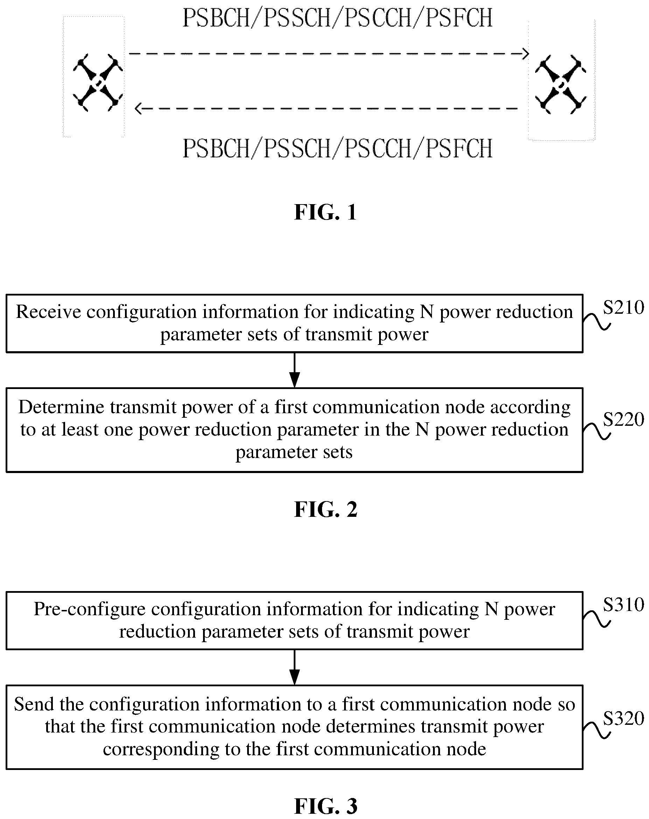

FIG. 1 is a schematic diagram of sidelink communication between two terminals in an NR system in the related art. For example, the terminals may be drones. As shown in FIG. 1, two drones may communicate through a physical sidelink broadcast channel (PSBCH), a physical sidelink shared channel (PSSCH), a physical sidelink control channel (PSCCH) and a physical sidelink feedback channel (PSFCH). In the NR system, transmit power via a sidelink may be determined in a power control manner. For example, the transmit power is determined in respective manners in the cases below.

In the first case, when a sidelink synchronization signals (SSS)/PSBCH block (S-SSB) is used, the transmit power is calculated by the following formula:

$$P_{S\text{-}SSB}(i) = \min\left(P_{CMAX}, P_{O,S\text{-}SSB} + 10\log_{10}\left(2^{\mu} \cdot M_{RB}^{S\text{-}SSB}\right) + \alpha_{S\text{-}SSB} \cdot PL\right)$$

where $P_{CMAX}$ denotes maximum transmit power; $P_{O,S\text{-}SSB}$ denotes a target power value of the S-SSB at a receiving end, where the value of $P_{O,S\text{-}SSB}$ may be configured by a higher-layer parameter *dl-PO-PSBCH* or otherwise is equal to the maximum transmit power; $\alpha_{S\text{-}SSB}$ denotes a partial path loss compensation factor of the S-SSB, where the value of $\alpha_{S\text{-}SSB}$ may be configured by a higher-layer parameter *dl-Alpha-PSBCH* or otherwise is equal to 1; $PL$ denotes an estimated downlink path loss; and $M_{RB}^{S\text{-}SSB}$ denotes the number of resource blocks of the S-SSB.

In the second case, when the PSSCH is used, the transmit power is calculated by the following formula:

$$P_{PSSCH}(i) = \min\left(P_{CMAX}, P_{MAX,CBR}, \min\left(P_{PSSCH,D}(i), P_{PSSCH,SL}(i)\right)\right)$$

where $P_{CMAX}$ denotes maximum transmit power; $P_{MAX,CBR}$ denotes a target power value of the PSSCH at a receiving end, where the value of $P_{MAX,CBR}$ may be configured by a base station or otherwise is equal to the maximum transmit power; if a higher-layer parameter *dl-P0-PSSCH-PSCCH* is provided, a target power value of a downlink PSSCH at the receiving end is $P_{PSSCH,D}(i) = P_{O,D} + 10\log_{10}\left(2^{\mu} \cdot M_{RB}^{PSSCH}(i)\right) + \alpha_D \cdot PL_D$; if a higher-layer parameter *sl-P0-PSSCH-PSCCH* is provided, a target power value of a sidelink PSSCH at the receiving end is $P_{PSSCH,D}(i)=\min(P_{CMAX},P_{MAX,CBR},P_{PSSCH,SL}(i))$; otherwise , $P_{PSSCH,D}(i)=\min(P_{CMAX},P_{MAX,CBR})$.

If the higher-layer parameter *sl-P0-PSSCH-PSCCH* is provided, a target power value of the downlink PSSCH at the receiving end is $P_{PSSCH,SL}(i) = P_{O,SL} + 10\log_{10}\left(2^{\mu} \cdot M_{RB}^{PSSCH}(i)\right) + \alpha_{SL} \cdot PL_{SL}$; otherwise, $P_{PSSCH,SL}(i)=\min(P_{CMAX},P_{MAX,CBR})$

In the third case, when the PSCCH is used, the transmit power is calculated by the following formula:

$$P_{PSCCH}(i) = 10\log_{10}\left(\frac{M_{RB}^{PSCCH}(i)}{M_{RB}^{PSSCH}(i)}\right) + P_{PSSCH}(i)$$

where $P_{PSSCH}(i)$ denotes transmit power of the PSSCH, and $M_{RB}^{PSCCH}(i)$ and $M_{RB}^{PSSCH}(i)$ denote the number of resource blocks of the PSCCH and the number of resource blocks of the PSSCH, respectively.

In the fourth case, when the PSFCH is used, the transmit power is calculated by the following formula:

if a higher-layer parameter *dl-P0-PSFCH* is provided, $P_{PSFCH, one}(i) = P_{O,PSFCH} + 10\log_{10}(2^\mu) + \alpha_{PSFCH} \cdot PL$;

where $P_{O,PSFCH}$ denotes a target power value of the PSFCH at a receiving end and may be provided by the higher-layer parameter *dl-P0-PSFCH*, $\alpha_{PSFCH}$ denotes a partial path loss compensation factor of the PSFCH and may be provided by a higher-layer parameter *dl-Alpha-PSFCH* or otherwise is 1; *PL* denotes an estimated downlink path loss.

As described above, the terminal uses single maximum transmit power as an upper limit of maximum transmit power in different states, causing relatively high transmit power and increased interference. To effectively eliminate the interference between terminal groups and reduce the power consumption of the terminal, embodiments of the present application provide a power determination method, so as to correct transmit power of a sidelink.

In an embodiment, FIG. 2 is a flowchart of a power determination method according to an embodiment of the present application. This embodiment may be implemented by a power determination device. The power determination device may be a first communication node. For example, the first communication node may be a first terminal in a terminal group or a second terminal in a terminal group. As shown in FIG. 2, this embodiment includes S210 and S220.

In S210, configuration information is received, where the configuration information is used for indicating N power reduction parameter sets of transmit power.

The value of N is related to the number of terminals included in the terminal group. It is to be understood that the value of N is equal to the number of terminals included in the terminal group. In an embodiment, the terminal refers to a drone, that is, the terminal group is a group of drones. It is to be understood that N is a positive integer greater than or equal to 2. During actual communication, each terminal corresponds to one power reduction parameter set. In an embodiment, the power reduction parameter set includes one or more power reduction parameters, which refer to parameters capable of achieving power reduction. In an embodiment, a second communication node pre-configures the configuration information and sends the configuration information to the first communication node.

In S220, transmit power corresponding to the first communication node is determined according to at least one power reduction parameter in the N power reduction parameter sets.

In the embodiment, the first communication node determines the corresponding transmit power according to the corresponding at least one power reduction parameter, thereby reducing transmit power, reducing system interference, and saving the power consumption of the first communication node.

In an embodiment, the power reduction parameter sets include at least one of the following parameters: a first power reduction factor associated with a received signal quality, a second power reduction factor associated with a received signal quality, a power reduction amount associated with a received signal quality, an offset of a first power reduction factor associated with a position of a first terminal relative to a terminal group, an offset of a second power reduction factor associated with a position of a first terminal relative to a terminal group, or an offset of a power reduction amount associated with a position of a first terminal relative to a terminal group.

In an embodiment, the second communication node pre-configures a mapping relationship between received signal qualities and first power reduction factors, a mapping relationship between received signal qualities and second power reduction factors and a mapping relationship between received signal qualities and power reduction amounts and sends the mapping relationship between each of first power reduction factors, second power reduction factors and power reduction amounts and received signal qualities to the first communication node so that the first communication node determines a corresponding first power reduction factor, second power reduction factor and power reduction amount according to a received signal quality.

The offset of the first power reduction factor is used for determining an offset of the first power reduction factor for a position of a different second terminal relative to the first terminal in the case where the second terminal is controlled by the first terminal. The offset of the second power reduction factor is used for determining an offset of the second power reduction factor for a position of a different second terminal relative to the first terminal in the case where the second terminal is controlled by the first terminal. The offset of the power reduction amount is used for determining an offset of the power reduction amount for a position of a different second terminal relative to the first terminal in the case where the second terminal is controlled by the first terminal. In an embodiment, the second communication node pre-configures a mapping relationship between positions of the first terminal relative to the terminal group and offsets of the first power reduction factor, a mapping relationship between positions of the first terminal relative to the terminal group and offsets of the second power reduction factor and a mapping relationship between positions of the first terminal relative to the terminal group and offsets of the power reduction amount and sends the mapping relationship between each of offsets of the first power reduction factor, offsets of the second power reduction factor and offsets of the power reduction amount and positions of the first terminal relative to the terminal group to the first communication node so that the first communication node determines a corresponding offset of the first power reduction factor, offset of the second power reduction factor and offset of the power reduction amount according to a position of the first terminal relative to the terminal group.

In an embodiment, in the case where the first communication node is at a different flight height (that is, a current positioning height), an upper limit of maximum transmit power of the first communication node is determined according to a pre-configured mapping relationship between positioning heights and upper limits of maximum transmit power. For example, when the first communication node is on the ground, 26 dBm may be used as the upper limit of maximum transmit power; and when the first communication node is in the air, 23 dBm may be used as the upper limit of maximum transmit power. In an embodiment, upper limits of maximum transmit power of the first communication node are associated with different resource pools, where the resource pools include at least one of different numbers of time-frequency resources, uplink types with different priorities or traffic types with different priorities. For example, a larger upper limit of maximum transmit power may be allocated to a PSSCH with a larger number of time-frequency resources, a PSSCH with a higher link type priority than a PSCCH or a resource of public warning information of a public warning system (PWS) with a higher traffic type priority. In an embodiment, the second communication node pre-configures an offset of maximum transmit power and determines the upper limit of maximum transmit power of the first communication node according to maximum transmit power and the offset of maximum transmit power.

In an embodiment, the first power reduction factor and the offset of the first power reduction factor are used for indicating a reduction coefficient of a target power value at a receiving end; the second power reduction factor and the offset of the second power reduction factor are used for indicating a reduction coefficient of an estimated downlink path loss; and the power reduction amount and the offset of the power reduction amount are used for indicating a reduction amount of a transmit power control portion. In the embodiment, transmit power may be corrected by the first power reduction factor, the second power reduction factor or the power reduction amount so as to obtain reduced transmit power; or the transmit power may be corrected by a combination of the first power reduction factor and the offset of the first power reduction factor, a combination of the second power reduction factor and the offset of the second power reduction factor or a combination of the power reduction amount and the offset of the power reduction amount so as to obtain reduced transmit power.

In an embodiment, the upper limit of maximum transmit power of the first communication node for determining the transmit power may be determined in one of the manners below.

The upper limit of maximum transmit power of the first communication node is determined according to a current positioning position of the first communication node and the pre-configured mapping relationship between upper limits of maximum transmit power and positioning heights of the first communication node. The upper limit of maximum transmit power of the first communication node is determined according to a resource pool where the maximum transmit power is located and a pre-configured mapping relationship between upper limits of maximum transmit power and different resource pools. The upper limit of maximum transmit power of the first communication node is determined according to the offset of maximum transmit power and pre-configured maximum transmit power. The upper limit of maximum transmit power of the first communication node is determined according to pre-configured maximum transmit power. The current positioning position may include the current positioning height.

In an embodiment, the first communication node may receive an upper limit of maximum transmit power pre-configured by the second communication node and determines the corresponding transmit power according to the upper limit of maximum transmit power and the at least one power reduction parameter; may directly determine the corresponding transmit power according to an upper limit of maximum transmit power corresponding to a capability level of the first communication node and the at least one power reduction parameter; or may determine the corresponding transmit power according to the at least one power reduction parameter and maximum transmit power directly pre-configured by the first communication node.

In an embodiment, in the case where the first communication node determines the corresponding transmit power according to the received upper limit of maximum transmit power pre-configured by the second communication node and the at least one power reduction parameter, the second communication node may configure corresponding upper limits of maximum transmit power according to position information (such as the positioning heights) of the first communication node, types of the first communication node, the resource pools or offsets of maximum transmit power, that is, the second communication node configures a mapping relationship between the upper limits of maximum transmit power and each of the position information (such as the positioning heights) of the first communication node, the types of the first communication node, the resource pools or the offsets of maximum transmit power.

In an embodiment, in the case where the first communication node determines the corresponding transmit power according to the upper limit of maximum transmit power corresponding to the capability level of the first communication node and the at least one power reduction parameter, the first communication node may not receive the upper limit of maximum transmit power pre-configured by the second communication node, which may also be understood as that the second communication node does not need to configure the upper limit of maximum transmit power.

In an embodiment, the types of the first communication node are associated with positions of the first communication node. For example, if the first communication node can fly in the air, the type of the first communication node is an aerial flight device, such as the drone. For example, if the first communication node can operate on the ground, the type of the first communication node is a ground terminal device, such as a smartphone.

In an embodiment, in the case where the first communication node determines the corresponding transmit power according to the at least one power reduction parameter and the maximum transmit power directly pre-configured by the first communication node, the first communication node may directly pre-configure the maximum transmit power (that is, a fixed value) according to a channel instruction or a modulation and coding scheme (MCS), use the maximum transmit power as the upper limit of maximum transmit power, and determine the corresponding transmit power according to the upper limit of maximum transmit power and the at least one power reduction parameter.

In an embodiment, the received signal quality includes at least one of reference signal received power (RSRP), a path loss (PL) or a signal-to-interference-plus-noise ratio (SINR).

In an embodiment, signaling carrying the N power reduction parameter sets includes one of a system information block (SIB), downlink control information (DCI) or radio resource control (RRC) signaling. In the embodiment, the second communication node sends the N power reduction parameter sets to the first communication node through the preceding signaling. In an embodiment, signaling carrying the upper limits of maximum transmit power also includes one of an SIB, DCI or RRC signaling.

In an embodiment, the power reduction parameter is determined in one of the manners below.

In the case where the power reduction parameter is the first power reduction factor, a first power reduction factor of the first communication node is determined according to a detected received signal quality and the pre-configured mapping relationship between received signal qualities and first power reduction factors. In the case where the power reduction parameter is the second power reduction factor, a second power reduction factor of the first communication node is determined according to a detected received signal quality and the pre-configured mapping relationship between received signal qualities and second power reduction factors. In the case where the power reduction parameter is the power reduction amount, a power reduction amount of the first communication node is determined according to a detected received signal quality and the pre-configured mapping relationship between received signal qualities and power reduction amounts. In the case where the power reduction parameter is the offset of the first power reduction factor, an offset of a first power reduction factor of the first communication node is determined according to a position of the first terminal relative to the terminal group and the pre-configured mapping relationship between positions of the first terminal relative to the terminal group and offsets of the first power reduction factor. In the case where the power reduction parameter is the offset of the second power reduction factor, an offset of a second power reduction factor of the first communication node is determined according to a position of the first terminal relative to the terminal group and the pre-configured mapping relationship between positions of the first terminal relative to the terminal group and offsets of the second power reduction factor. In the case where the power reduction parameter is the offset of the power reduction amount, an offset of a power reduction amount of the first communication node is determined according to a position of the first terminal relative to the terminal group and the pre-configured mapping relationship between positions of the first terminal relative to the terminal group and offsets of the power reduction amount.

In an embodiment, in the case where the first communication node is directly controlled by the second communication node, the first power reduction factor of the first communication node may be determined according to the detected received signal quality and the pre-configured mapping relationship between received signal qualities and first power reduction factors; the second power reduction factor of the first communication node may be determined according to the detected received signal quality and the pre-configured mapping relationship between received signal qualities and second power reduction factors; or the power reduction amount of the first communication node may be determined according to the detected received signal quality and the pre-configured mapping relationship between received signal qualities and power reduction amounts.

In an embodiment, in the case where all second terminals in the terminal group are controlled by the first terminal, the offset of the first power reduction factor of the first communication node may be determined according to the position of the first terminal relative to the terminal group and the pre-configured mapping relationship between positions of the first terminal relative to the terminal group and offsets of the first power reduction factor; the offset of the second power reduction factor of the first communication node may be determined according to the position of the first terminal relative to the terminal group and the pre-configured mapping relationship between positions of the first terminal relative to the terminal group and offsets of the second power reduction factor; or the offset of the power reduction amount of the first communication node may be determined according to the position of the first terminal relative to the terminal group and the pre-configured mapping relationship between positions of the first terminal relative to the terminal group and offsets of the power reduction amount.

In an embodiment, in the case where the first communication node is the first terminal in the terminal group, the power reduction parameter of the first communication node is a power reduction parameter of the first terminal; and the upper limit of maximum transmit power of the first communication node is an upper limit of maximum transmit power of the first terminal.

In an embodiment, in the case where the first communication node is the first terminal in the terminal group, the power determination method applied by the first communication node further includes the following.

The power reduction parameter of the first terminal and the upper limit of maximum transmit power of the first terminal are sent to the second terminal in the terminal group; a power reduction parameter corresponding to the second terminal in the terminal group is determined according to a predetermined relative distance between the second terminal and the first terminal and the power reduction parameter of the first terminal; and an upper limit of maximum transmit power of the second terminal in the terminal group is determined according to the upper limit of maximum transmit power of the first terminal.

In the embodiment, in the case where all the terminals (including the first terminal and the second terminal) in the terminal group are directly controlled by the second communication node, the first terminal receives the power reduction parameter sets and the upper limits of maximum transmit power sent by the second communication node and detects the received signal quality, so as to determine the first power reduction factor, the second power reduction factor and the power reduction amount of each terminal in the terminal group. In the case where all the second terminals in the terminal group are controlled by the first terminal, the second terminal receives the power reduction parameter of the first terminal and the upper limit of maximum transmit power of the first terminal sent by the first terminal, determines the relative distance from the first terminal according to position information of the second terminal, determines the power reduction parameter of the second terminal according to the power reduction parameter of the first terminal and the relative distance, and directly uses the upper limit of maximum transmit power of the first terminal as the upper limit of maximum transmit power of the second terminal in the terminal group.

In an embodiment, the first terminal broadcasts information to the second terminal in the terminal group through a master information block (MIB).

In an embodiment, that the transmit power corresponding to the first communication node is determined according to the at least one power reduction parameter in the N power reduction parameter sets and the upper limit of maximum transmit power includes one of the following.

The transmit power corresponding to the first communication node is determined according to the upper limit of maximum transmit power, the first power reduction factor, the target power value at the receiving end, the number of resource blocks, a partial path loss factor and the estimated downlink path loss. The transmit power corresponding to the first communication node is determined according to the upper limit of maximum transmit power, the target power value at the receiving end, the number of resource blocks, a partial path loss factor, the second power reduction factor and the estimated downlink path loss. The transmit power corresponding to the first communication node is determined according to the upper limit of maximum transmit power, the target power value at the receiving end, the number of resource blocks, a partial path loss factor, the estimated downlink path loss and the power reduction amount. The transmit power corresponding to the first communication node is determined according to the upper limit of maximum transmit power, the first power reduction factor, the offset of the first power reduction factor, the target power value at the receiving end, the number of resource blocks, a partial path loss factor and the estimated downlink path loss. The transmit power corresponding to the first communication node is determined according to the upper limit of maximum transmit power, the target power value at the receiving end, the number of resource blocks, a partial path loss factor, the second power reduction factor, the offset of the second power reduction factor and the estimated downlink path loss. The transmit power corresponding to the first communication node is determined according to the upper limit of maximum transmit power, the target power value at the receiving end, the number of resource blocks, a partial path loss factor, the estimated downlink path loss, the power reduction amount and the offset of the power reduction amount.

In the embodiment, in the case where all the terminals in the terminal group are directly controlled by the first communication node, the corresponding transmit power may be determined according to the upper limit of maximum transmit power and at least one of the first power reduction factor, the second power reduction factor or the power reduction amount. In the case where all the second terminals in the terminal group are controlled by the first terminal, the corresponding transmit power may be determined according to the upper limit of maximum transmit power and at least one of the combination of the first power reduction factor and the offset of the first power reduction factor, the combination of the second power reduction factor and the offset of the second power reduction factor or the combination of the power reduction amount and the offset of the power reduction amount.

In an embodiment, first terminals and/or second terminals with the same region identifier use the same power reduction parameter and the same upper limit of maximum transmit power. The region identifier (ID) refers to a zone ID. In the embodiment, the first terminals, the second terminals or both the first terminals and the second terminals in the same region use the same power reduction parameter and the same upper limit of maximum transmit power, thereby reducing a cumbersome configuration process of the configuration information by the second communication node and reducing a data reception amount of the first communication node.

In an embodiment, FIG. 3 is a flowchart of another power determination method according to an embodiment of the present application. This embodiment may be implemented by a power determination device. The power determination device may be a second communication node. For example, the second communication node may be a network side (such as a base station or a core network). As shown in FIG. 3, this embodiment includes S310 and S320.

In S310, configuration information is pre-configured, where the configuration information is used for indicating N power reduction parameter sets of transmit power.

In S320, the configuration information is sent to a first communication node so that the first communication node determines transmit power corresponding to the first communication node.

In the embodiment, the second communication node pre-configures the configuration information and sends the configuration information to the first communication node so that the first communication node reduces transmit power according to a corresponding power reduction parameter, so as to reduce system interference and save the power consumption of the first communication node. It is to be understood that each first communication node may correspond to a different power reduction parameter set.

In an embodiment, the power reduction parameter sets include at least one of the following parameters: a first power reduction factor associated with a received signal quality, a second power reduction factor associated with a received signal quality, a power reduction amount associated with a received signal quality, an offset of a first power reduction factor associated with a position of a first terminal relative to a terminal group, an offset of a second power reduction factor associated with a position of a first terminal relative to a terminal group, or an offset of a power reduction amount associated with a position of a first terminal relative to a terminal group.

In an embodiment, the first power reduction factor and the offset of the first power reduction factor are used for indicating a reduction coefficient of a target power value at a receiving end; the second power reduction factor and the offset of the second power reduction factor are used for indicating a reduction coefficient of an estimated downlink path loss; and the power reduction amount and the offset of the power reduction amount are used for indicating a reduction amount of a transmit power control portion.

In an embodiment, signaling carrying the N power reduction parameter sets and an upper limit of maximum transmit power includes one of an SIB, DCI or RRC signaling.

For the explanation and determination manners of the power reduction parameter and the upper limit of maximum transmit power involved in the power determination method applied by the second communication node, reference is made to the description of related contents in the power determination method applied by the first communication node in the preceding embodiments. The details are not repeated here.

In an embodiment, a determination process of transmit power is described by using an example in which a first communication node is a first terminal, a second communication node is a network side, all second terminals in a terminal group are controlled by the first terminal, and a target power value at a receiving end is reduced. For example, the first terminal is a master drone and a second terminal is a slave drone, that is, the terminal group is a group of drones.

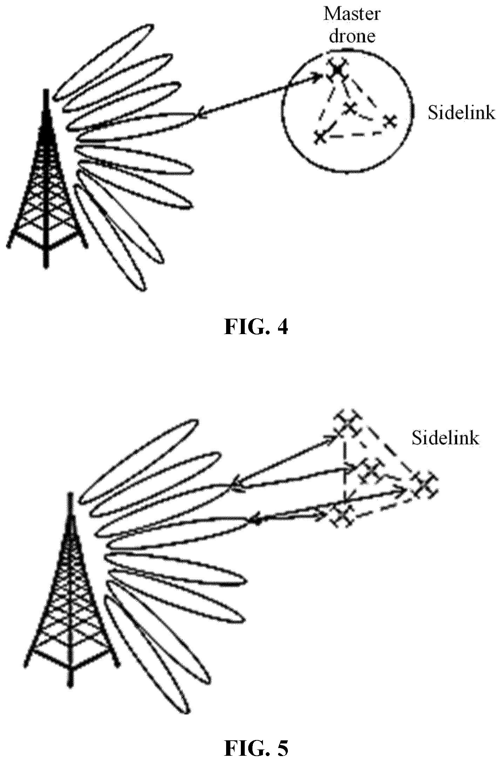

FIG. 4 is a schematic diagram of communication between a network side and a terminal according to an embodiment of the present application. As shown in FIG. 4, the network side sends pre-configured power reduction parameter sets and upper limits of maximum transmit power to the first terminal, and then the first terminal sends power reduction parameter sets and an upper limit of maximum transmit power to the second terminals so that the second terminals determine corresponding transmit power. In an embodiment, the first terminal may determine corresponding transmit power by directly using a received power reduction parameter set and an upper limit of maximum transmit power corresponding to a capability level of the first terminal or by using a received power reduction parameter set and maximum transmit power directly pre-configured by the network side. In the embodiment, the determination process of transmit power includes S11 to S19.

In S11, the network side pre-configures a mapping relationship between received signal qualities and first power reduction factors $\alpha_{reduce}$ and a mapping relationship between offsets $\Delta\alpha_{reduce}$ of a first power reduction factor and positions of the first terminal relative to the terminal group. A received signal quality includes at least one of RSRP, a PL or an SINR. Table 1 is a table of the mapping relationship between received signal qualities and first power reduction factors. Table 2 is a table of the mapping relationship between offsets of the first power reduction factor and relative positions. The mapping relationships may be as shown in the tables below.

Table 1 Mapping relationship between received signal qualities and first power reduction factors

| RSRP/PL/SINR | Threshold 1 | Threshold 2 | ... | Threshold n |
|---|---|---|---|---|
| $\alpha_{reduce}$ | $\alpha_{reduce,1}$ | $\alpha_{reduce,2}$ | ... | $\alpha_{reduce,n}$ |

In Table 1, n denotes the number of thresholds of the received signal quality.

Table 2 Mapping relationship between relative positions and offsets of the first power reduction factor

| Relative Position d | d1 | d2 | ... | dm |
|---|---|---|---|---|
| $\Delta\alpha_{reduce}$ | $\Delta\alpha_{reduce,1}$ | $\Delta\alpha_{reduce,2}$ | ... | $\Delta\alpha_{reduce,m}$ |

In Table 2, m denotes the number of drones in the group of drones. It is to be understood that a relative position between each drone and the master drone corresponds to one offset of the first power reduction factor.
In an embodiment, the first power reduction factor is associated with a region identifier (that is, zone ID). Table 3 is a table of a mapping relationship between the same zone ID and the first power reduction factor.

Table 3 Mapping relationship between the same zone ID and the first power reduction factor

| Zone ID (Zone_id) | Zone_1 | Zone_2 | ... | Zone_m |
|---|---|---|---|---|
| $\alpha_{reduce}$ | $\alpha_{reduce,1}$ | $\alpha_{reduce,2}$ | ... | $\alpha_{reduce,m}$ |

As shown in Table 3, the same zone ID in m regions uses the same first power reduction factor $\alpha_{reduce}$.
In S12, the network side pre-configures a mapping relationship between upper limits $P_{CMAX,level}$ of maximum transmit power and positioning heights of the drone. For example, if the drone is in the air, $P_{CMAX,level}$ is PC3 (23 dBm); if the drone is on the ground, $P_{CMAX,level}$ is PC2 (26 dBm), or $P_{CMAX,level}$ is as shown in Table 4. Table 4 shows the mapping relationship between different positioning heights of the drone and upper limits of maximum transmit power.

Table 4 Mapping relationship between positioning heights of the drone and upper limits of maximum transmit power

| Height h | $\leq$ h1 | (h1, h2] | ... | (hL-1, hL] |
|---|---|---|---|---|
| $P_{CMAX,level}$ | $P_{CMAX,1}$ | $P_{CMAX,2}$ | ... | $P_{CMAX,L}$ |

L denotes the number of different height thresholds.

Alternatively, the upper limits of maximum transmit power are associated with different resource pools, where the resource pools include at least one of different numbers of time-frequency resources, uplink types with different priorities or traffic types with different priorities. For example, a larger upper limit of maximum transmit power may be allocated to a PSSCH with a larger number of time-frequency resources, a PSSCH with a higher link type priority than a PSCCH or a resource of public warning information of a PWS with a higher traffic type priority.
Alternatively, an offset $\Delta_{offset}$ of maximum transmit power is pre-configured, that is, the upper limit of maximum transmit power is $P_{CMAX,Level} = P_{CMAX} + \Delta_{offset}$.
In S13, a base station sends, via signaling to the master drone, the mapping relationship between received signal qualities and $\alpha_{reduce}$, the mapping relationship between $\Delta\alpha_{reduce}$ and relative positions between the master drone and slave drones in the group of drones and the mapping relationship between $P_{CMAX,level}$ and positioning heights, or the mapping relationship between received signal qualities and $\alpha_{reduce}$, the mapping relationship between $\Delta\alpha_{reduce}$ and relative positions between the master drone and slave drones in the group of drones and $\Delta_{offset}$, where the signaling includes at least one of an SIB, DCI or RRC signaling.
In S14, the master drone determines a received signal quality according to a detected received signal and determines a mapped first power reduction factor $\alpha_{reduce}^{master}$ of the master drone according to the received signal quality.

In S15, the master drone determines an upper limit $P_{CMAX,level}^{master}$ of maximum transmit power according to a current positioning height, a different resource pool or a received offset $\Delta_{offset}$ of maximum transmit power.

The current positioning height of the master drone may be determined by a positioning height from a Global Positioning System (GPS).

In S16, the master drone determines the transmit power of the master drone according to $\alpha_{reduce}^{master}$ and $P_{CMAX,level}^{master}$.

In S17, the master drone broadcasts $\alpha_{reduce}^{master}$, $\Delta\alpha_{reduce}$, $P_{CMAX,level}^{master}$ and a position of the master drone to the slave drone in the group of drones.

A broadcast signal for the master drone to broadcast information to the slave drone in the group of drones is an MIB.

In S18, the slave drone in the group of drones receives the broadcast information, calculates a relative distance $\Delta d$ according to GPS position information of the slave drone, and determines a first power reduction factor

$$\alpha_{reduce}^{'} = \alpha_{reduce}^{master} + \Delta\alpha_{reduce} \cdot \Delta d$$

and an upper limit of maximum transmit power

$$P_{CMAX,level} = P_{CMAX,level}^{master}$$

corresponding to the slave drone.

In S19, to transmit a PSBCH, transmit power of the slave drone in the group of drones is as follows:

$$P_{S-SSB}(i) = \min(P_{CMAX,level}, \alpha_{reduce}^{'} \cdot P_{O,S-SSB} + 10\log_{10}(2^{\mu} \cdot M_{RB}^{S-SSB}) + \alpha_{S-SSB} \cdot PL)$$

The values and meanings of $\alpha_{reduce}^{'}$ and $P_{CMAX,level}$ are as described above, and other parameters are indicated by a higher layer and their values and meanings are as described above.

To transmit the PSSCH, corrected transmit power is as follows:

$$P_{PSSCH}(i) = \min(P_{CMAX,level}, P_{MAX,CBR}, \min(P_{PSSCH,D}(i), P_{PSSCH,SL}(i)))$$

$$P_{PSSCH,D}(i) = \alpha_{reduce}^{'} \cdot P_{O,D} + 10\log_{10}(2^{\mu} \cdot M_{RB}^{PSSCH}(i)) + \alpha_{D} \cdot PL_{D} \quad ;$$

$$P_{PSSCH,SL}(i) = \alpha_{reduce}^{'} \cdot P_{O,SL} + 10\log_{10}(2^{\mu} \cdot M_{RB}^{PSSCH}(i)) + \alpha_{SL} \cdot PL_{SL} \quad ;$$

and the values and meanings of *a reduce* and $P_{CMAX,level}$ are as described above, and other parameters are configured by the higher layer in a power control scheme in an NR system.

To transmit the PSCCH, corrected transmit power is as follows:

$$P_{PSCCH}(i) = 10\log_{10}\left(\frac{M_{RB}^{PSCCH}(i)}{M_{RB}^{PSSCH}(i)}\right) + P_{PSSCH}(i)$$

$P_{PSSCH}(i)$ denotes the corrected transmit power for the PSSCH, and the meanings and values of other parameters are as described above.

To transmit a PSFCH, corrected transmit power is as follows:

$$P_{PSFCH,one} = \alpha'_{reduce} \cdot P_{O,PSFCH} + 10\log_{10}(2^{\mu}) + \alpha_{PSFCH} \cdot PL .$$

The values and meanings of *a reduce* and $P_{CMAX,level}$ are as described above, and other parameters are configured by the higher layer in the power control scheme in the NR system.

In an embodiment, a determination process of transmit power is described by using an example in which a first communication node is a first terminal, a second communication node is a network side, all second terminals in a terminal group are controlled by the first terminal, and a downlink path loss (PL) is reduced. For example, the first terminal is a master drone and a second terminal is a slave drone, that is, the terminal group is a group of drones. In the embodiment, a communication connection between the network side and the terminal is shown in FIG. 4 in the preceding embodiment. In an embodiment, the first terminal may determine corresponding transmit power by directly using a received power reduction parameter set and an upper limit of maximum transmit power corresponding to a capability level of the first terminal or by using a received power reduction parameter set and maximum transmit power directly pre-configured by the network side. In the embodiment, the determination process of transmit power includes S21 to S29.

In S21, the network side pre-configures a mapping relationship between received signal qualities and second power reduction factors $\beta_{reduce}$ and a mapping relationship between offsets $\Delta\beta_{reduce}$ of a second power reduction factor and positions of the first terminal relative to the terminal group. A received signal quality includes at least one of RSRP, a PL or an SINR. Table 5 is a table of the mapping relationship between received signal qualities and second power reduction factors. Table 6 is a table of the mapping relationship between offsets of the second power reduction factor and relative positions. The mapping relationships may be as shown in the tables below.

Table 5 Mapping relationship between received signal qualities and second power reduction factors

| RSRP/PL/SINR | Threshold 1 | Threshold 2 | ... | Threshold n |
|---|---|---|---|---|
| $\beta_{reduce}$ | $\beta_{reduce,1}$ | $\beta_{reduce,2}$ | ... | $\beta_{reduce,n}$ |

In Table 5, n denotes the number of thresholds of the received signal quality.

Table 6 Mapping relationship between relative positions and offsets of the second power reduction factor

| Relative Position d | d1 | d2 | ... | dm |
|---|---|---|---|---|
| $\Delta\beta_{reduce}$ | $\Delta\beta_{reduce,1}$ | $\Delta\beta_{reduce,2}$ | ... | $\Delta\beta_{reduce,m}$ |

In Table 6, m denotes the number of drones in the group of drones. It is to be understood that a relative position between each drone and the master drone corresponds to one offset of the second power reduction factor.

In an embodiment, the second power reduction factor is associated with a region identifier (that is, zone ID). Table 7 is a table of a mapping relationship between the same zone ID and the second power reduction factor.

Table 7 Mapping relationship between the same zone ID and the second power reduction factor

| Zone ID (Zone_id) | Zone_1 | Zone_2 | ... | Zone_m |
|---|---|---|---|---|
| $\beta'_{reduce}$ | $\beta_{reduce,1}$ | $\beta_{reduce,2}$ | ... | $\beta_{reduce,m}$ |

As shown in Table 7, the same zone ID in m regions uses the same second power reduction factor $\beta'_{reduce}$.

In S22, the network side pre-configures a mapping relationship between upper limits $P_{CMAX,level}$ of maximum transmit power and positioning heights of the drone. For example, if the drone is in the air, $P_{CMAX,level}$ is PC3 (23 dBm); if the drone is on the ground, $P_{CMAX,level}$ is PC2 (26 dBm), or $P_{CMAX,level}$ is as shown in Table 4 in the preceding embodiment.

Alternatively, upper limits of maximum transmit power associated with different resource pools are pre-configured. Alternatively, an offset $\Delta_{offset}$ of maximum transmit power is pre-configured, that is, an upper limit of maximum transmit power is $P_{CMAX,Level} = P_{CMAX} + \Delta_{offset}$.

In S23, a base station sends, via signaling to the master drone, the mapping relationship between received signal qualities and $\beta_{reduce}$, the mapping relationship between $\Delta\beta_{reduce}$ and relative positions between the master drone and slave drones in the group of drones and the mapping relationship between $P_{CMAX,level}$ and positioning heights, or the mapping relationship between received signal qualities and $\beta_{reduce}$, the mapping relationship between $\Delta\beta_{reduce}$ and relative positions between the master drone and slave drones in the group of drones and $\Delta_{offset}$, where the signaling includes at least one of an SIB, DCI or RRC signaling.

In S24, the master drone determines a received signal quality according to a detected received signal and determines a mapped second power reduction factor $\beta_{reduce}^{master}$ of the master drone according to the received signal quality.

In S25, the master drone determines an upper limit $P_{CMAX,level}^{master}$ of maximum transmit power according to a current positioning height, a different resource pool or a received offset $\Delta_{offset}$ of maximum transmit power.

The current positioning height of the master drone may be determined by a positioning height from a GPS.

In S26, the master drone determines the transmit power of the master drone according to $\beta_{reduce}^{master}$ and $P_{CMAX,level}^{master}$.

In S27, the master drone broadcasts $\beta_{reduce}^{master}$, $\Delta\beta_{reduce}$, $P_{CMAX,level}^{master}$ and a position of the master drone to the slave drone in the group of drones.

A broadcast signal for the master drone to broadcast information to the slave drone in the group of drones is an MIB.

In S28, the slave drone in the group of drones receives the broadcast information, calculates a relative distance $\Delta d$ according to GPS position information of the slave drone, and determines a second power reduction factor

$$\beta_{reduce}^{'} = \beta_{reduce}^{master} + \Delta\beta_{reduce} / \Delta d$$

and an upper limit of maximum transmit power

$$P_{CMAX,level} = P_{CMAX,level}^{master}$$

corresponding to the slave drone.

In S29, to transmit a PSBCH, transmit power of the slave drone in the group of drones is as follows:

$$P_{S-SSB}(i) = \min(P_{CMAX,level}, P_{O,S-SSB} + 10\log_{10}(2^{\mu} \cdot M_{RB}^{S-SSB}) + (\alpha_{S-SSB} - \beta_{reduce}^{'}) \cdot PL)$$

The values and meanings of $\beta_{reduce}^{'}$ and $P_{CMAX,level}$ are as described above, and other parameters are indicated by a higher layer and their values and meanings are as described above.

To transmit a PSSCH, corrected transmit power is as follows:

$$P_{PSSCH}(i) = \min(P_{CMAX,level}, P_{MAX,CBR}, \min(P_{PSSCH,D}(i), P_{PSSCH,SL}(i)))$$

$$P_{PSSCH,D}(i) = P_{O,D} + 10\log_{10}(2^{\mu} \cdot M_{RB}^{PSSCH}(i)) + (\alpha_{D} - \beta_{reduce}^{'}) \cdot PL_{D} \quad ;$$

$$P_{PSSCH,SL}(i) = P_{O,SL} + 10\log_{10}(2^{\mu} \cdot M_{RB}^{PSSCH}(i)) + (\alpha_{SL} - \beta_{reduce}^{'}) \cdot PL_{SL} \quad ;$$

and the values and meanings of $\beta'_{reduce}$ and $P_{CMAX,level}$ are as described above, and other parameters are configured by the higher layer in a power control scheme in an NR system.

To transmit a PSCCH, corrected transmit power is as follows:

$$P_{PSCCH}(i) = 10 \log_{10}\left(\frac{M_{RB}^{PSCCH}(i)}{M_{RB}^{PSSCH}(i)}\right) + P_{PSSCH}(i)$$

.

$P_{PSSCH}(i)$ denotes the corrected transmit power for the PSSCH, and the meanings and values of other parameters are as described above.

To transmit a PSFCH, corrected transmit power is as follows:

$$P_{PSFCH,one} = P_{O,PSFCH} + 10 \log_{10}(2^{\mu}) + (\alpha_{PSFCH} - \beta'_{reduce}) \cdot PL$$

.

The values and meanings of $\beta'_{reduce}$ and $P_{CMAX,level}$ are as described above, and other parameters are configured by the higher layer in the power control scheme in the NR system.

In an embodiment, a determination process of transmit power is described by using an example in which a first communication node is a first terminal, a second communication node is a network side, all second terminals in a terminal group are controlled by the first terminal, and transmit power is reduced by a power reduction amount. For example, the first terminal is a master drone and a second terminal is a slave drone, that is, the terminal group is a group of drones. In the embodiment, a communication connection between the network side and the terminal is shown in FIG. 4 in the preceding embodiment. In an embodiment, the first terminal may determine corresponding transmit power by directly using a received power reduction parameter set and an upper limit of maximum transmit power corresponding to a capability level of the first terminal or by using a received power reduction parameter set and maximum transmit power directly pre-configured by the network side. In the embodiment, the determination process of transmit power includes S31 to S39.

In S31, the network side pre-configures a mapping relationship between received signal qualities and power reduction amounts $\lambda_{reduce}$ and a mapping relationship between offsets $\Delta\lambda$ of a power reduction amount and positions of the first terminal relative to the terminal group. A received signal quality includes at least one of RSRP, a PL or an SINR. Table 8 is a table of the mapping relationship between received signal qualities and power reduction amounts. Table 9 is a table of the mapping relationship between offsets of the power reduction amount and relative positions. The mapping relationships may be as shown in the tables below.

Table 8 Mapping relationship between received signal qualities and power reduction amounts

| RSRP/PL/SINR | Threshold 1 | Threshold 2 | ... | Threshold n |
|---|---|---|---|---|
| $\lambda_{reduce}$ | $\lambda_{reduce,1}$ | $\lambda_{reduce,2}$ | ... | $\lambda_{reduce,n}$ |

In Table 8, n denotes the number of thresholds of the received signal quality.

Table 9 Mapping relationship between relative positions and offsets of the power reduction amount

| Relative Position d | d1 | d2 | ... | dm |
|---|---|---|---|---|
| $\Delta\lambda$ | $\Delta\lambda_1$ | $\Delta\lambda_2$ | ... | $\Delta\lambda_m$ |

In Table 9, m denotes the number of drones in the group of drones. It is to be understood that a relative position between each drone and the master drone corresponds to one offset of the power reduction amount.

In an embodiment, the power reduction amount is associated with a region identifier (that is, zone ID). Table 10 is a table of a mapping relationship between the same zone ID and the power reduction amount.

Table 10 Mapping relationship between the same zone ID and the power reduction amount

| Zone ID (Zone_id) | Zone_1 | Zone_2 | ... | Zone_m |
|---|---|---|---|---|
| $\lambda'_{reduce}$ | $\lambda_{reduce,1}$ | $\lambda_{reduce,2}$ | ... | $\lambda_{reduce,m}$ |

As shown in Table 10, the same zone ID in m regions uses the same power reduction amount $\lambda'_{reduce}$ .

In S32, the network side pre-configures a mapping relationship between upper limits $P_{CMAX,level}$ of maximum transmit power and positioning heights of the drone. For example, if the drone is in the air, $P_{CMAX,level}$ is PC3 (23 dBm); if the drone is on the ground, $P_{CMAX,level}$ is PC2 (26 dBm), or $P_{CMAX,level}$ is as shown in Table 4 in the preceding embodiment.

Alternatively, upper limits of maximum transmit power associated with different resource pools are pre-configured. Alternatively, an offset $\Delta_{offset}$ of maximum transmit power is pre-configured, that is, an upper limit of maximum transmit power is $P_{CMAX,Level} = P_{CMAX} + \Delta_{offset}$.

In S33, a base station sends, via signaling to the master drone, the mapping relationship between received signal qualities and $\lambda_{reduce}$ , the mapping relationship between $\Delta\lambda$ and relative positions between the master drone and slave drones in the group of drones and the mapping relationship between $P_{CMAX,level}$ and positioning heights, or the mapping relationship between received signal qualities and $\lambda_{reduce}$ , the mapping relationship between $\Delta\lambda$ and relative positions between the master drone and slave drones in the group of drones and $\Delta_{offset}$, where the signaling includes at least one of an SIB, DCI or RRC signaling.

In S34, the master drone determines a received signal quality according to a detected received signal and determines a mapped power reduction amount $\lambda_{reduce}^{master}$ of the master drone according to the received signal quality.

In S35, the master drone determines an upper limit $P_{CMAX,level}^{master}$ of maximum transmit power according to a current positioning height, a different resource pool or a received offset $\Delta_{offset}$ of maximum transmit power.

The current positioning height of the master drone may be determined by a positioning height from a GPS.

In S36, the master drone determines the transmit power of the master drone according to $\lambda_{reduce}$ and $P_{CMAX,level}^{master}$ .

In S37, the master drone broadcasts $\lambda_{reduce}^{master}$ , $\Delta\lambda$, $P_{CMAX,level}^{master}$ and a position of the master drone to the slave drone in the group of drones.

A broadcast signal for the master drone to broadcast information to the slave drone in the group of drones is an MIB.

In S3 8, the slave drone in the group of drones receives the broadcast information, calculates a relative distance $\Delta d$ according to GPS position information of the slave drone, and determines a second power reduction factor

$$\lambda'_{reduce} = \lambda_{reduce}^{master} + \Delta\lambda / \Delta d \qquad P_{CMAX,level} = P_{CMAX,level}^{master}$$

and an upper limit of maximum transmit power corresponding to the slave drone.

In S39, to transmit a PSBCH, transmit power of the slave drone in the group of drones is as follows:

$$P_{S-SSB}(i) = \min(P_{CMAX,level}, P_{O,S-SSB} + 10\log_{10}(2^\mu \cdot M_{RB}^{S-SSB}) + \alpha_{S-SSB} \cdot PL - \lambda'_{reduce}) .$$

The values and meanings of $\lambda'_{reduce}$ and $P_{MAX,level}$ are as described above, PL denotes an estimated path loss, and other parameters are indicated by a higher layer and their values and meanings are as described above.

To transmit a PSSCH, corrected transmit power is as follows:

$$P_{PSSCH}(i) = \min(P_{CMAX,level}, P_{MAX,CBR}, \min(P_{PSSCH,D}(i), P_{PSSCH,SL}(i)))$$

$$P_{PSSCH,D}(i) = P_{O,D} + 10\log_{10}(2^{\mu} \cdot M_{RB}^{PSSCH}(i)) + \alpha_{D} \cdot PL_{D} - \lambda'_{reduce}$$

$$P_{PSSCH,SL}(i) = P_{O,SL} + 10\log_{10}(2^{\mu} \cdot M_{RB}^{PSSCH}(i)) + \alpha_{SL} \cdot PL_{SL} - \lambda'_{reduce}$$

and the values and meanings of $\lambda'_{reduce}$ and $P_{CMAX,level}$ are as described above, PL denotes the estimated path loss, and other parameters are configured by the higher layer in a power control scheme in an NR system.

To transmit a PSCCH, corrected transmit power is as follows:

$$P_{PSCCH}(i) = 10\log_{10}\left(\frac{M_{RB}^{PSCCH}(i)}{M_{RB}^{PSSCH}(i)}\right) + P_{PSSCH}(i)$$

$P_{PSSCH}(i)$ denotes the corrected transmit power for the PSSCH, and the meanings and values of other parameters are as described above.

To transmit a PSFCH, corrected transmit power is as follows:

$$P_{PSFCH,one} = P_{O,PSFCH} + 10\log_{10}(2^{\mu}) + \alpha_{PSFCH} \cdot PL - \lambda'_{reduce}$$

The values and meanings of $\lambda'_{reduce}$ and $P_{CMAX,level}$ are as described above, PL denotes the estimated path loss, and other parameters are configured by the higher layer in the power control scheme in the NR system.

In an embodiment, a determination process of transmit power is described by using an example in which a first communication node is a first terminal, a second communication node is a network side, all terminals (that is, the first terminal and second terminals) in a terminal group are directly controlled by the network side, and a target power value at a receiving end is reduced. For example, the first terminal is a master drone and a second terminal is a slave drone, that is, the terminal group is a group of drones.

FIG. 5 is another schematic diagram of communication between a network side and terminals according to an embodiment of the present application. As shown in FIG. 5, the network side sends pre-configured power reduction parameter sets and upper limits of maximum transmit power to the first terminal and the second terminals in the terminal group so that the first terminal and the second terminals determine corresponding transmit power. In an embodiment, the first terminal may determine corresponding transmit power by directly using a received power reduction parameter set and an upper limit of maximum transmit power corresponding to a capability level of the first terminal or by using a received power reduction parameter set and maximum transmit power directly pre-configured by the network side. In the embodiment, the determination process of transmit power includes S41 to S49.

In S41, the network side pre-configures a mapping relationship between received signal qualities and first power reduction factors $\alpha_{reduce}$ and upper limits $P_{CMAX,level}$ of maximum transmit power for different positioning heights or different resource pools, or a mapping relationship between received signal qualities and first power reduction factors $\alpha_{reduce}$ and an offset $\Delta_{offset}$ of maximum transmit power. A received signal quality includes at least one of RSRP, a PL or an SINR. The mapping relationship between received signal qualities and first power reduction factors is as shown in Table 1, and a mapping relationship between different positioning heights and upper limits of maximum transmit power is as shown in Table 4. The first power reduction factor is associated with a region identifier (that is, zone ID), that is, the same zone ID in m regions uses the same first power reduction factor $\alpha'_{reduce}$, as shown in Table 3.

In S42, a base station sends, via signaling to each drone in the group of drones, the mapping relationship between received signal qualities and $\alpha_{reduce}$ and the mapping relationship between $P_{CMAX,level}$ and positioning heights, or the mapping relationship between received signal qualities and $\alpha_{reduce}$ and $\Delta_{offset}$, where the signaling includes at least one of an SIB, DCI or RRC signaling.

In S43, the group of drones receives the preceding information and determines a first power reduction factor of each drone according to a detected received signal quality, or all terminals with the same zone ID use the same first power reduction factor $\alpha'_{reduce}$.

In S44, each drone in the group of drones determines an upper limit $P_{CMAX,level}$ of maximum transmit power according to a positioning height, a different resource pool-related configuration or a received offset $\Delta_{offset}$ of maximum transmit power.

In S45, the drones in the group of drones determine their transmit power according to their respective $\alpha'_{reduce}$ and $P_{CMAX,level}$.

In S46, to transmit a PSBCH, corrected transmit power is as follows:

$$P_{S-SSB}(i) = \min(P_{CMAX,level}, \alpha'_{reduce} \cdot P_{O,S-SSB} + 10\log_{10}(2^\mu \cdot M_{RB}^{S-SSB}) + \alpha_{S-SSB} \cdot PL).$$

The values and meanings of $\alpha'_{reduce}$ and $P_{CMAX,level}$ are as described above, and other parameters are indicated by a higher layer and their values and meanings are as described above.

To transmit a PSSCH, corrected transmit power is as follows:

$$P_{PSSCH}(i) = \min(P_{CMAX,level}, P_{MAX,CBR}, \min(P_{PSSCH,D}(i), P_{PSSCH,SL}(i))).$$

$$P_{PSSCH,D}(i) = \alpha'_{reduce} \cdot P_{O,D} + 10\log_{10}(2^\mu \cdot M_{RB}^{PSSCH}(i)) + \alpha_D \cdot PL_D$$

$$P_{PSSCH,SL}(i) = \alpha'_{reduce} \cdot P_{O,SL} + 10\log_{10}(2^\mu \cdot M_{RB}^{PSSCH}(i)) + \alpha_{SL} \cdot PL_{SL};$$

and the values and meanings of $\alpha'_{reduce}$ and $P_{CMAX,level}$ are as described above, and other parameters are configured by the higher layer in a power control scheme in an NR system.

To transmit a PSCCH, corrected transmit power is as follows:

$$P_{PSCCH}(i) = 10\log_{10}\left(\frac{M_{RB}^{PSCCH}(i)}{M_{RB}^{PSSCH}(i)}\right) + P_{PSSCH}(i).$$

$P_{PSSCH}(i)$ denotes the corrected transmit power for the PSSCH, and the meanings and values of other parameters are as described above.

To transmit a PSFCH, corrected transmit power is as follows:

$$P_{PSFCH,one} = \alpha'_{reduce} \cdot P_{O,PSFCH} + 10\log_{10}(2^\mu) + \alpha_{PSFCH} \cdot PL.$$

The values and meanings of $\alpha'_{reduce}$ and $P_{CMAX,level}$ are as described above, and other parameters are configured by the higher layer in the power control scheme in the NR system.

In an embodiment, a determination process of transmit power is described by using an example in which a first communication node is a first terminal, a second communication node is a network side, all terminals (that is, the first terminal and second terminals) in a terminal group are directly controlled by the network side, and a downlink path loss is reduced. For example, the first terminal is a master drone and a second terminal is a slave drone, that is, the terminal group is a group of drones. In the embodiment, communication connections between the network side and the terminals are shown in FIG. 5 in the preceding embodiment. In an embodiment, the first terminal may determine corresponding transmit power by directly using a received power reduction parameter set and an upper limit of maximum transmit power corresponding to a capability level of the first terminal or by using a received power reduction parameter set and maximum transmit power directly pre-configured by the network side. In the embodiment, the determination process of transmit power includes S51 to S56.

In S51, the network side pre-configures a mapping relationship between received signal qualities and second power reduction factors $\beta_{reduce}$ and upper limits $P_{CMAX,level}$ of maximum transmit power for different positioning heights or different resource pools, or a mapping relationship between received signal qualities and second power reduction factors $\beta_{reduce}$ and an offset $\Delta_{offset}$ of maximum transmit power. A received signal quality includes at least one of RSRP, a PL or an SINR. The mapping relationship between received signal qualities and second power reduction factors is as shown in Table 5, and a mapping relationship between different positioning heights and upper limits of maximum transmit power is as shown in Table 4. The second power reduction factor is associated with a region identifier (that is, zone ID), that is, the same zone ID in m regions uses the same second power reduction factor $\beta'_{reduce}$, as shown in Table 7.

In S52, a base station sends, via signaling to each drone in the group of drones, the mapping relationship between received signal qualities and $\beta_{reduce}$ and the mapping relationship between $P_{CMAX,level}$ and positioning heights, or the mapping relationship between received signal qualities and $\beta_{reduce}$ and $\Delta_{offset}$, where the signaling includes at least one of an SIB, DCI or RRC signaling.

In S53, the group of drones receives the preceding information and determines a second power reduction factor of each drone according to a detected received signal quality, or all terminals with the same zone ID use the same second power reduction factor $\beta'_{reduce}$.

In S54, each drone in the group of drones determines an upper limit $P_{CMAX,level}$ of maximum transmit power according to a positioning height, a different resource pool-related configuration or a received offset $\Delta_{offset}$ of maximum transmit power.

In S55, the drones in the group of drones determine their transmit power according to their respective $\beta'_{reduce}$ and $P_{CMAX,level}$

In S56, to transmit a PSBCH, corrected transmit power is as follows:

$$P_{S-SSB}(i) = \min(P_{CMAX,level}, P_{O,S-SSB} + 10\log_{10}(2^{\mu} \cdot M_{RB}^{S-SSB}) + (\alpha_{S-SSB} - \beta'_{reduce}) \cdot PL)$$

The values and meanings of $\beta'_{reduce}$ and $P_{CMAX,level}$ are as described above, and other parameters are indicated by a higher layer and their values and meanings are as described above.

To transmit a PSSCH, corrected transmit power is as follows:

$$P_{PSSCH}(i) = \min(P_{CMAX,level}, P_{MAX,CBR}, \min(P_{PSSCH,D}(i), P_{PSSCH,SL}(i)))$$

$$P_{PSSCH,D}(i) = P_{O,D} + 10\log_{10}(2^{\mu} \cdot M_{RB}^{PSSCH}(i)) + (\alpha_D - \beta'_{reduce}) \cdot PL_D ;$$

$$P_{PSSCH,SL}(i) = P_{O,SL} + 10\log_{10}(2^{\mu} \cdot M_{RB}^{PSSCH}(i)) + (\alpha_{SL} - \beta'_{reduce}) \cdot PL_{SL} ;$$

and the values and meanings of $\beta'_{reduce}$ and $P_{CMAX,level}$ are as described above, and other parameters are configured by the higher layer in a power control scheme in an NR system.

To transmit a PSCCH, corrected transmit power is as follows:

$$P_{PSCCH}(i) = 10\log_{10}\left(\frac{M_{RB}^{PSCCH}(i)}{M_{RB}^{PSSCH}(i)}\right) + P_{PSSCH}(i)$$

$P_{PSSCH}(i)$ denotes the corrected transmit power for the PSSCH, and the meanings and values of other parameters are as described above.

To transmit a PSFCH, corrected transmit power is as follows:

$$P_{PSFCH,one} = P_{O,PSFCH} + 10\log_{10}(2^\mu) + (\alpha_{PSFCH} - \beta'_{reduce}) \cdot PL$$

The values and meanings of $\beta'_{reduce}$ and $P_{CMAX,level}$ are as described above, and other parameters are configured by the higher layer in the power control scheme in the NR system.

In an embodiment, a determination process of transmit power is described by using an example in which a first communication node is a first terminal, a second communication node is a network side, all terminals (that is, the first terminal and second terminals) in a terminal group are directly controlled by the network side, and transmit power is reduced by a power reduction amount. For example, the first terminal is a master drone and a second terminal is a slave drone, that is, the terminal group is a group of drones. In the embodiment, communication connections between the network side and the terminals are shown in FIG. 5 in the preceding embodiment. In an embodiment, the first terminal may determine corresponding transmit power by directly using a received power reduction parameter set and an upper limit of maximum transmit power corresponding to a capability level of the first terminal or by using a received power reduction parameter set and maximum transmit power directly pre-configured by the network side. In the embodiment, the determination process of transmit power includes S61 to S66.

In S61, the network side pre-configures a mapping relationship between received signal qualities and power reduction amounts $\lambda_{reduce}$ and upper limits $P_{CMAX,level}$ of maximum transmit power for different positioning heights or different resource pools, or a mapping relationship between received signal qualities and power reduction amounts $\lambda_{reduce}$ and an offset $\Delta_{offset}$ of maximum transmit power. A received signal quality includes at least one of RSRP, a PL or an SINR. The mapping relationship between received signal qualities and power reduction amounts $\lambda_{reduce}$ is as shown in Table 8, and a mapping relationship between different positioning heights and upper limits of maximum transmit power is as shown in Table 4. The power reduction amount is associated with a region identifier (that is, zone ID), that is, the same zone ID in m regions uses the same power reduction amount $\lambda'_{reduce}$, as shown in Table 10.

In S62, a base station sends, via signaling to each drone in the group of drones, the mapping relationship between received signal qualities and $\lambda_{reduce}$ and the mapping relationship between $P_{CMAX,level}$ and positioning heights, or the mapping relationship between received signal qualities and $\lambda_{reduce}$ and $\Delta_{offset}$, where the signaling includes at least one of an SIB, DCI or RRC signaling.

In S63, the group of drones receives the preceding information and determines a power reduction amount $\lambda_{reduce}$ of each drone according to a detected received signal quality, or all terminals with the same zone ID use the same power reduction amount $\lambda'_{reduce}$.

In S64, each drone in the group of drones determines an upper limit $P_{CMAX,level}$ of maximum transmit power according to a positioning height, a different resource pool-related configuration or a received offset $\Delta_{offset}$ of maximum transmit power.

In S65, the drones in the group of drones determine their transmit power according to their respective $\lambda'_{reduce}$

and $P_{CMAX,level}$.

In S66, to transmit a PSBCH, corrected transmit power is as follows:

$$P_{S-SSB}(i) = \min(P_{CMAX,level}, P_{O,S-SSB} + 10\log_{10}(2^\mu \cdot M_{RB}^{S-SSB}) + \alpha_{S-SSB} \cdot PL - \lambda'_{reduce})$$

.

The values and meanings of $\lambda'_{reduce}$ and $P_{CMAX,level}$ are as described above, and other parameters are indicated by a higher layer and their values and meanings are as described above.

To transmit a PSSCH, corrected transmit power is as follows:

$$P_{PSSCH}(i) = \min(P_{CMAX,level}, P_{MAX,CBR}, \min(P_{PSSCH,D}(i), P_{PSSCH,SL}(i)))$$

.

$$P_{PSSCH,D}(i) = P_{O,D} + 10\log_{10}(2^\mu \cdot M_{RB}^{PSSCH}(i)) + \alpha_D \cdot PL_D - \lambda'_{reduce}$$

;

$$P_{PSSCH,SL}(i) = P_{O,SL} + 10\log_{10}(2^\mu \cdot M_{RB}^{PSSCH}(i)) + \alpha_{SL} \cdot PL_{SL} - \lambda'_{reduce}$$

;

and the values and meanings of $\lambda'_{reduce}$ and $P_{CMAX,level}$ are as described above, and other parameters are configured by the higher layer in a power control scheme in an NR system.

To transmit a PSCCH, corrected transmit power is as follows:

$$P_{PSCCH}(i) = 10\log_{10}\left(\frac{M_{RB}^{PSCCH}(i)}{M_{RB}^{PSSCH}(i)}\right) + P_{PSSCH}(i)$$

.

$P_{PSSCH}(i)$ denotes the corrected transmit power for the PSSCH, and the meanings and values of other parameters are as described above.

To transmit a PSFCH, corrected transmit power is as follows:

$$P_{PSFCH,one} = P_{O,PSFCH} + 10\log_{10}(2^\mu) + \alpha_{PSFCH} \cdot PL - \lambda'_{reduce}$$

.

The values and meanings of $\lambda'_{reduce}$ and $P_{CMAX,level}$ are as described above, and other parameters are configured by the higher layer in the power control scheme in the NR system.

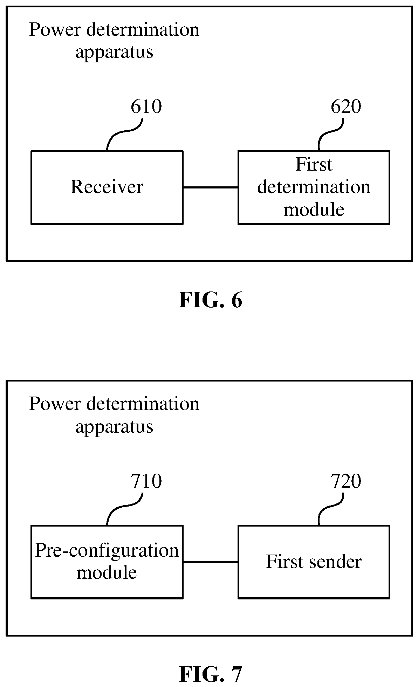

In an embodiment, FIG. 6 is a block diagram of a power determination apparatus according to an embodiment of the present application. This embodiment is applied to a power determination device. The power determination device may be a first communication node. As shown in FIG. 6, this embodiment includes a receiver 610 and a first determination module 620.

The receiver 610 is configured to receive configuration information for indicating N power reduction parameter sets of transmit power. The first determination module 620 is configured to determine transmit power corresponding to the first communication node according to at least one power reduction parameter in the N power reduction parameter sets.

In an embodiment, the power reduction parameter sets include at least one of the following parameters: a first power reduction factor associated with a received signal quality, a second power reduction factor associated with a received signal quality, a power reduction amount associated with a received signal quality, an offset of a first power reduction factor associated with a position of a first terminal relative to a terminal group, an offset of a second power reduction factor associated with a position of a first terminal relative to a terminal group, or an offset of a power reduction amount associated with a position of a first terminal relative to a terminal group.

In an embodiment, an upper limit of maximum transmit power of the first communication node for determining the transmit power may be determined in one of the manners below.

The upper limit of maximum transmit power of the first communication node is determined according to a current positioning position of the first communication node and a pre-configured mapping relationship between upper limits of maximum transmit power and positioning heights of the first communication node. The upper limit of maximum transmit power of the first communication node is determined according to a resource pool where maximum transmit power is located and a pre-configured mapping relationship between upper limits of maximum transmit power and different resource pools. The upper limit of maximum transmit power of the first communication node is determined according to an offset of maximum transmit power and pre-configured maximum transmit power. The upper limit of maximum transmit power of the first communication node is determined according to pre-configured maximum transmit power.

In an embodiment, the first power reduction factor and the offset of the first power reduction factor are used for indicating a reduction coefficient of a target power value at a receiving end; the second power reduction factor and the offset of the second power reduction factor are used for indicating a reduction coefficient of an estimated downlink path loss; and the power reduction amount and the offset of the power reduction amount are used for indicating a reduction amount of a transmit power control portion.

In an embodiment, the received signal quality includes at least one of RSRP, a PL or an SINR.

In an embodiment, signaling carrying the N power reduction parameter sets includes one of an SIB, DCI or RRC signaling.

In an embodiment, the power reduction parameter is determined in one of the manners below.

In the case where the power reduction parameter is the first power reduction factor, a first power reduction factor of the first communication node is determined according to a detected received signal quality and a pre-configured mapping relationship between received signal qualities and first power reduction factors. In the case where the power reduction parameter is the second power reduction factor, a second power reduction factor of the first communication node is determined according to a detected received signal quality and a pre-configured mapping relationship between received signal qualities and second power reduction factors. In the case where the power reduction parameter is the power reduction amount, a power reduction amount of the first communication node is determined according to a detected received signal quality and a pre-configured mapping relationship between received signal qualities and power reduction amounts. In the case where the power reduction parameter is the offset of the first power reduction factor, an offset of a first power reduction factor of the first communication node is determined according to a position of the first terminal relative to the terminal group and a pre-configured mapping relationship between positions of the first terminal relative to the terminal group and offsets of the first power reduction factor. In the case where the power reduction parameter is the offset of the second power reduction factor, an offset of a second power reduction factor of the first communication node is determined according to a position of the first terminal relative to the terminal group and a pre-configured mapping relationship between positions of the first terminal relative to the terminal group and offsets of the second power reduction factor. In the case where the power reduction parameter is the offset of the power reduction amount, an offset of a power reduction amount of the first communication node is determined according to a position of the first terminal relative to the terminal group and a pre-configured mapping relationship between positions of the first terminal relative to the terminal group and offsets of the power reduction amount.

In an embodiment, the upper limit of maximum transmit power is determined in one of the manners below.

The upper limit of maximum transmit power of the first communication node is determined according to the current positioning position of the first communication node and the pre-configured mapping relationship between upper limits of maximum transmit power and positioning heights of the first communication node. The upper limit of maximum transmit power of the first communication node is determined according to the resource pool where the maximum transmit power is located and the pre-configured mapping relationship between upper limits of maximum transmit power and different resource pools. The upper limit of maximum transmit power of the first communication node is determined according to the offset of maximum transmit power and the pre-configured maximum transmit power.

In an embodiment, in the case where the first communication node is the first terminal in the terminal group, the power reduction parameter of the first communication node is a power reduction parameter of the first terminal; and the upper limit of maximum transmit power of the first communication node is an upper limit of maximum transmit power of the first terminal.

In an embodiment, in the case where the first communication node is the first terminal in the terminal group, the power determination apparatus applied to the first communication node further includes a second sender, a second determination module and a third determination module.

The second sender is configured to send the power reduction parameter of the first terminal and the upper limit of maximum transmit power of the first terminal to a second terminal in the terminal group. The second determination module is configured to determine a power reduction parameter corresponding to the second terminal in the terminal group according to a predetermined relative distance between the second terminal and the first terminal and the power reduction parameter of the first terminal. The third determination module is configured to determine an upper limit of maximum transmit power of the second terminal in the terminal group according to the upper limit of maximum transmit power of the first terminal.

In an embodiment, the first terminal broadcasts information to the second terminal in the terminal group through an MIB.

In an embodiment, that the transmit power corresponding to the first communication node is determined according to the at least one power reduction parameter in the N power reduction parameter sets and the upper limit of maximum transmit power includes one of the following.

The transmit power corresponding to the first communication node is determined according to the upper limit of maximum transmit power, the first power reduction factor, the target power value at the receiving end, the number of resource blocks, a partial path loss factor and the estimated downlink path loss. The transmit power corresponding to the first communication node is determined according to the upper limit of maximum transmit power, the target power value at the receiving end, the number of resource blocks, a partial path loss factor, the second power reduction factor and the estimated downlink path loss. The transmit power corresponding to the first communication node is determined according to the upper limit of maximum transmit power, the target power value at the receiving end, the number of resource blocks, a partial path loss factor, the estimated downlink path loss and the power reduction amount. The transmit power corresponding to the first communication node is determined according to the upper limit of maximum transmit power, the first power reduction factor, the offset of the first power reduction factor, the target power value at the receiving end, the number of resource blocks, a partial path loss factor and the estimated downlink path loss. The transmit power corresponding to the first communication node is determined according to the upper limit of maximum transmit power, the target power value at the receiving end, the number of resource blocks, a partial path loss factor, the second power reduction factor, the offset of the second power reduction factor and the estimated downlink path loss. The transmit power corresponding to the first communication node is determined according to the upper limit of maximum transmit power, the target power value at the receiving end, the number of resource blocks, a partial path loss factor, the estimated downlink path loss, the power reduction amount and the offset of the power reduction amount.

In an embodiment, first terminals and/or second terminals with the same region identifier use the same power reduction parameter and the same upper limit of maximum transmit power.

The power determination apparatus provided in this embodiment is configured to implement the power determination method applied by the first communication node in the embodiment shown in FIG. 2 and has similar implementation principles and technical effects, which are not repeated here.

In an embodiment, FIG. 7 is a block diagram of another power determination apparatus according to an embodiment of the present application. This embodiment is applied to a power determination device. The power determination device may be a second communication node. As shown in FIG. 7, this embodiment includes a pre-configuration module 710 and a first sender 720.

The pre-configuration module 710 is configured to pre-configure configuration information for indicating N power reduction parameter sets of transmit power. The first sender 720 is configured to send the configuration information to a first communication node so that the first communication node determines transmit power corresponding to the first communication node.

In an embodiment, the power reduction parameter sets include at least one of the following parameters: a first power reduction factor associated with a received signal quality, a second power reduction factor associated with a received signal quality, a power reduction amount associated with a received signal quality, an offset of a first power reduction factor associated with a position of a first terminal relative to a terminal group, an offset of a second power reduction factor associated with a position of a first terminal relative to a terminal group, or an offset of a power reduction amount associated with a position of a first terminal relative to a terminal group.

In an embodiment, the first power reduction factor and the offset of the first power reduction factor are used for indicating a reduction coefficient of a target power value at a receiving end; the second power reduction factor and the offset of the second power reduction factor are used for indicating a reduction coefficient of an estimated downlink path loss; and the power reduction amount and the offset of the power reduction amount are used for indicating a reduction amount of a transmit power control portion.

In an embodiment, signaling carrying the N power reduction parameter sets and an upper limit of maximum transmit power includes one of an SIB, DCI or RRC signaling.

The power determination apparatus provided in this embodiment is configured to implement the power determination method applied by the second communication node in the embodiment shown in FIG. 3 and has similar implementation principles and technical effects, which are not repeated here.

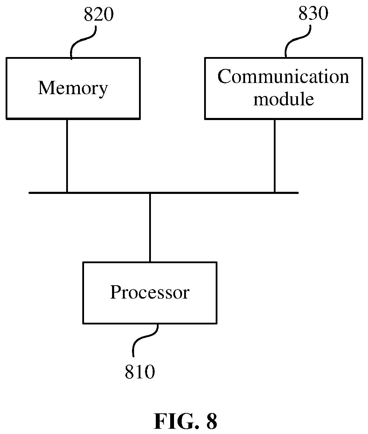

FIG. 8 is a structure diagram of a communication device according to an embodiment of the present application. As shown in FIG. 8, the device provided in the present application includes a processor 810, a memory 820 and a communication module 830. One or more processors 810 may be provided in the device, with one processor 810 shown as an example in FIG. 8. One or more memories 820 may be provided in the device, with one memory 820 shown as an example in FIG. 8. The processor 810, the memory 820 and the communication module 830 in the device may be connected via a bus or in other manners. FIG. 8 shows the connection via a bus as an example. In this embodiment, the device may be a first communication node (for example, a first terminal or a second terminal in a terminal group).

As a computer-readable storage medium, the memory 820 may be configured to store software programs, computer-executable programs and modules, such as program instructions/modules (for example, the receiver 610 and the first determination module 620 in the power determination apparatus) corresponding to the device according to any embodiment of the present application. The memory 820 may include a program storage region and a data storage region, where the program storage region may store an operating system and an application program required by at least one function, and the data storage region may store data created depending on the use of the device. Additionally, the memory 820 may include a high-speed random-access memory and may also include a nonvolatile memory, such as at least one magnetic disk memory, a flash memory or another nonvolatile solid-state memory. In some examples, the memory 820 may further include memories remotely disposed relative to the processor 810, and these remote memories may be connected to the device via a network. Examples of the preceding network include, but are not limited to, the Internet, an intranet, a local area network, a mobile communication network and a combination thereof.

The communication module 830 is configured to perform communication interaction between the first terminal, the second terminal in the terminal group and a second communication node.

In the case where the communication device is the first communication node, the preceding device may be configured to perform the power determination method applied by the first communication node in any one of the preceding embodiments and has corresponding functions and effects.

In the case where the communication device is the second communication node, the preceding device may be configured to perform the power determination method applied by the second communication node in any one of the preceding embodiments and has corresponding functions and effects.

An embodiment of the present application further provides a storage medium including a computer-executable instruction for performing a power determination method applied by a first communication node when executed by a processor in a computer. The method includes: receiving configuration information for indicating N power reduction parameter sets of transmit power; and determining transmit power corresponding to the first communication node according to at least one power reduction parameter in the N power reduction parameter sets.

An embodiment of the present application further provides a storage medium including a computer-executable instruction for performing a power determination method applied by a second communication node when executed by a processor in a computer. The method includes: pre-configuring configuration information for indicating N power reduction parameter sets of transmit power; and sending the configuration information to a first communication node so that the first communication node determines transmit power corresponding to the first communication node.

It is to be understood by those skilled in the art that the term user equipment covers any suitable type of wireless user equipment, for example, a mobile phone, a portable data processing device, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored on a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

**Claims**

1. A power determination method, the method being applied by a first communication node and comprising:

   receiving configuration information for indicating N power reduction parameter sets of transmit power; and
   determining transmit power corresponding to the first communication node according to at least one power reduction parameter in the N power reduction parameter sets.

2. The method of claim 1, wherein the N power reduction parameter sets comprise at least one of the following parameters:
   a first power reduction factor associated with a received signal quality, a second power reduction factor associated with a received signal quality, a power reduction amount associated with a received signal quality, an offset of a first power reduction factor associated with a position of a first terminal relative to a terminal group, an offset of a second power reduction factor associated with a position of a first terminal relative to a terminal group, or an offset of a power reduction amount associated with a position of a first terminal relative to a terminal group.

3. The method of claim 1, wherein an upper limit of maximum transmit power of the first communication node for determining the transmit power is determined in one of the following manners:

   determining the upper limit of the maximum transmit power of the first communication node according to a current positioning position of the first communication node and a pre-configured mapping relationship between upper limits of maximum transmit power and positioning heights of the first communication node;
   determining the upper limit of the maximum transmit power of the first communication node according to a resource pool where the maximum transmit power is located and a pre-configured mapping relationship between upper limits of maximum transmit power and different resource pools;
   determining the upper limit of the maximum transmit power of the first communication node according to an offset of the maximum transmit power and pre-configured maximum transmit power; or
   determining the upper limit of the maximum transmit power of the first communication node according to pre-configured maximum transmit power.

4. The method of claim 2, wherein the first power reduction factor and the offset of the first power reduction factor are used for indicating a reduction coefficient of a target power value at a receiving end; the second power reduction factor and the offset of the second power reduction factor are used for indicating a reduction coefficient of an estimated downlink path loss; and the power reduction amount and the offset of the power reduction amount are used for indicating a reduction amount of a transmit power control portion.

5. The method of claim 2, wherein the received signal quality comprises at least one of reference signal received power (RSRP), a path loss (PL) or a signal-to-interference-plus-noise ratio (SINR).

6. The method of claim 2, wherein signaling carrying the N power reduction parameter sets comprises one of a system information block (SIB), downlink control information (DCI) or radio resource control (RRC) signaling.

7. The method of claim 2, wherein the power reduction parameter is determined in one of the following manners:

   in a case where the power reduction parameter is the first power reduction factor, determining a first power reduction factor of the first communication node according to a detected received signal quality and a pre-configured mapping relationship between received signal qualities and first power reduction factors;
   in a case where the power reduction parameter is the second power reduction factor, determining a second power reduction factor of the first communication node according to a detected received signal quality and a pre-configured mapping relationship between received signal qualities and second power reduction factors;
   in a case where the power reduction parameter is the power reduction amount, determining a power reduction amount of the first communication node according to a detected received signal quality and a pre-configured mapping relationship between received signal qualities and power reduction amounts;
   in a case where the power reduction parameter is the offset of the first power reduction factor, determining an offset of a first power reduction factor of the first communication node according to a position of the first terminal relative to the terminal group and a pre-configured mapping relationship between positions of the first terminal relative to the terminal group and offsets of the first power reduction factor;
   in a case where the power reduction parameter is the offset of the second power reduction factor, determining an offset of a second power reduction factor of the first communication node according to a position of the first terminal relative to the terminal group and a pre-configured mapping relationship between positions of the first terminal relative to the terminal group and offsets of the second power reduction factor; or

in a case where the power reduction parameter is the offset of the power reduction amount, determining an offset of a power reduction amount of the first communication node according to a position of the first terminal relative to the terminal group and a pre-configured mapping relationship between positions of the first terminal relative to the terminal group and offsets of the power reduction amount.

8. The method of claim 1, wherein in a case where the first communication node is a first terminal in a terminal group, the power reduction parameter of the first communication node is a power reduction parameter of the first terminal, and an upper limit of maximum transmit power of the first communication node is an upper limit of maximum transmit power of the first terminal.

9. The method of claim 8, wherein in the case where the first communication node is the first terminal in the terminal group, the method further comprises:

sending the power reduction parameter of the first terminal and the upper limit of maximum transmit power of the first terminal to a second terminal in the terminal group;

determining a power reduction parameter corresponding to the second terminal in the terminal group according to a predetermined relative distance between the second terminal and the first terminal and the power reduction parameter of the first terminal; and

determining an upper limit of maximum transmit power of the second terminal in the terminal group according to the upper limit of maximum transmit power of the first terminal.

10. The method of claim 8, wherein the first terminal broadcasts information to a second terminal in the terminal group through a master information block (MIB).

11. The method of claim 2, wherein determining the transmit power corresponding to the first communication node according to the at least one power reduction parameter in the N power reduction parameter sets comprises one of:

determining the transmit power corresponding to the first communication node according to an upper limit of maximum transmit power, the first power reduction factor, a target power value at a receiving end, a number of resource blocks, a partial path loss factor and an estimated downlink path loss;

determining the transmit power corresponding to the first communication node according to an upper limit of maximum transmit power, a target power value at a receiving end, a number of resource blocks, a partial path loss factor, the second power reduction factor and an estimated downlink path loss;

determining the transmit power corresponding to the first communication node according to an upper limit of maximum transmit power, a target power value at a receiving end, a number of resource blocks, a partial path loss factor, an estimated downlink path loss and the power reduction amount;

determining the transmit power corresponding to the first communication node according to an upper limit of maximum transmit power, the first power reduction factor, the offset of the first power reduction factor, a target power value at a receiving end, a number of resource blocks, a partial path loss factor and an estimated downlink path loss;

determining the transmit power corresponding to the first communication node according to an upper limit of maximum transmit power, a target power value at a receiving end, a number of resource blocks, a partial path loss factor, the second power reduction factor, the offset of the second power reduction factor and an estimated downlink path loss; or

determining the transmit power corresponding to the first communication node according to an upper limit of maximum transmit power, a target power value at a receiving end, a number of resource blocks, a partial path loss factor, an estimated downlink path loss, the power reduction amount and the offset of the power reduction amount.

12. The method of any one of claims 1 to 11, wherein first terminals and/or second terminals with a same region identifier use a same power reduction parameter and a same upper limit of maximum transmit power.

13. A power determination method, the method being applied by a second communication node and comprising:

pre-configuring configuration information for indicating N power reduction parameter sets of transmit power; and

sending the configuration information to a first communication node so that the first communication node determines transmit power corresponding to the first communication node.

14. The method of claim 13, wherein the N power reduction parameter sets comprise at least one of the following parameters:
a first power reduction factor associated with a received signal quality, a second power reduction factor associated with a received signal quality, a power reduction amount associated with a received signal quality, an offset of a first power reduction factor associated with a position of a first terminal relative to a terminal group, an offset of a second power reduction factor associated with a position of a first terminal relative to a terminal group, or an offset of a power reduction amount associated with a position of a first terminal relative to a terminal group.

15. The method of claim 14, wherein the first power reduction factor and the offset of the first power reduction factor are used for indicating a reduction coefficient of a target power value at a receiving end; the second power reduction factor and the offset of the second power reduction factor are used for indicating a reduction coefficient of an estimated downlink path loss; and the power reduction amount and the offset of the power reduction amount are used for indicating a reduction amount of a transmit power control portion.

16. The method of claim 14, wherein signaling carrying the N power reduction parameter sets comprises one of a system information block (SIB), downlink control information (DCI) or radio resource control (RRC) signaling.

17. A communication device, comprising a communication module, a memory and at least one processor; wherein

the communication module is configured to perform communication interaction between a first terminal, a second terminal in a terminal group and a second communication node;
the memory is configured to store at least one program; and
when executed by the at least one processor, the at least one program causes the at least one processor to perform the power determination method of any one of claims 1 to 12 or claims 13 to 16.

18. A storage medium, which stores a computer program which, when executed by a processor, causes the processor to perform the power determination method of any one of claims 1 to 12 or claims 13 to 16.

PSBCH/PSSCH/PSCCH/PSFCH

PSBCH/PSSCH/PSCCH/PSFCH

**FIG. 1**

| Receive configuration information for indicating N power reduction parameter sets of transmit power | ⟋S210 |

| Determine transmit power of a first communication node according to at least one power reduction parameter in the N power reduction parameter sets | ⟋S220 |

**FIG. 2**

| Pre-configure configuration information for indicating N power reduction parameter sets of transmit power | ⟋S310 |

| Send the configuration information to a first communication node so that the first communication node determines transmit power corresponding to the first communication node | ⟋S320 |

**FIG. 3**

Master
drone

Sidelink

**FIG. 4**

Sidelink

**FIG. 5**

Power determination apparatus

610

620

Receiver

First determination module

**FIG. 6**

Power determination apparatus

710

720

Pre-configuration module

First sender

**FIG. 7**

820         830

| Memory | Communication module |
|---|---|

Processor

810

**FIG. 8**

## INTERNATIONAL SEARCH REPORT

International application No.

**PCT/CN2022/115532**

### A. CLASSIFICATION OF SUBJECT MATTER

H04W 24/02(2009.01)i; H04W 52/02(2009.01)i; H04W 92/10(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; 3GPP: 功率, 缩减, 缩放, 参数, 因子, 系数, 偏移, 偏置, 组, 集, 多个, 配置, 指示, 发射功率, 发送功率, 最大, 上限, 信号质量, 信号强度, 接收功率, 路2w 损, 信 4w 噪 4w 比, 映射, 关联, power, scal+, parameter?, factor?, coefficient?, offset, group, set, multi+, configur+, indicat+, transmi+ power, max+, quality, SINR, RSRP, pathloss, PL, map+, associat+

### C. DOCUMENTS CONSIDERED TO BE RELEVANT

| Category* | Citation of document, with indication, where appropriate, of the relevant passages | Relevant to claim No. |
|---|---|---|
| PX | US 2021392674 A1 (QUALCOMM INC.) 16 December 2021 (2021-12-16) description, paragraphs [0071]-[0224] | 1-6, 8, 10-18 |
| X | CN 111480386 A (QUALCOMM INC.) 31 July 2020 (2020-07-31) claims 1-22, and description, paragraphs [0076]-[0181] | 1-6, 8, 10-18 |
| X | US 2014341128 A1 (BROADCOM CORP.) 20 November 2014 (2014-11-20) description, paragraphs [0016]-[0066] | 1-6, 8, 10-18 |
| A | US 8838051 B1 (QUALCOMM INC.) 16 September 2014 (2014-09-16) entire document | 1-18 |
| A | HUAWEI et al. "Power Control for V2V" *3GPP TSG RAN WG1 Meeting #83 R1-156429*, 06 November 2015 (2015-11-06), pp. 1-4 | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2022** | **18 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/115532** |

| Patent document cited in search report | | | Publication date (day/month/year) | Patent family member(s) | | | Publication date (day/month/year) |
| --- | --- | --- | --- | --- | --- | --- | --- |
| US | 2021392674 | A1 | 16 December 2021 | WO | 2021253047 | A1 | 16 December 2021 |
| CN | 111480386 | A | 31 July 2020 | WO | 2019118733 | A1 | 20 June 2019 |
| | | | | EP | 3725125 | A1 | 21 October 2020 |
| | | | | US | 2019190668 | A1 | 20 June 2019 |
| US | 2014341128 | A1 | 20 November 2014 | US | 2020015124 | A1 | 09 January 2020 |
| US | 8838051 | B1 | 16 September 2014 | | None | | |

Form PCT/ISA/210 (patent family annex) (January 2015)